# EUROPEAN PATENT APPLICATION

(11) **EP 4 708 494 A2**
(43) Date of publication of application: **11.03.2026**
(21) Application number: 25190623.6
(22) Date of filing: 21.07.2025
(51) Int. Cl.: H01M 50/204, A62C 31/00, H01M 50/383

(54) **ENERGY STORAGE SYSTEM**

(30) Priority: 03.09.2024 KR 20240118937
(71) Applicant: SAMSUNG SDI CO., LTD., Yongin-si, Gyeonggi-do 17084 (KR)
(72) Inventor: KIM, Taejin, 17084 Yongin-si (KR)
(74) Representative: Marks & Clerk LLP

(57) **Abstract**

An energy storage system includes a module unit comprising the plurality of battery modules. The plurality of battery modules each accommodates a plurality of cell units. Each of the plurality of cell units comprise a plurality of battery cells arranged in a first direction and are arranged in a second direction, perpendicular to the first direction. A pipe portion is connected to a fire extinguishing tank storing a fire extinguishing agent and extends into the module unit. The pipe portion includes a main pipe extending from the fire extinguishing tank and a sub-pipe branched from the main pipe. One end of the sub-pipe is connected to a first branch point of the main pipe, and another end of the sub-pipe is connected to a second branch point of the main pipe. The sub-pipe extends to pass through all the plurality of battery modules.

## Description

### FIELD

The disclosure relates to an energy storage system.

### BACKGROUND

An energy storage system (ESS) is a system that is capable of storing surplus electricity or electricity produced by using renewable energy. An ESS may be used to control efficient power supply and demand by storing idle power at the time of low electricity demand and supplying electricity at the time of high electricity demand.

A space or a facility where an ESS is installed and operated may be provided with equipment for suppressing battery fires in the event of fires caused by electric shock, short circuits, external surges, etc.

### SUMMARY

According to some embodiments, an energy storage system (ESS) is provided to suppres and extinguish a fire.

However, aspects and features of the disclosure are not limited to those described below, and other aspects and features not mentioned will be clearly understood by those of ordinary skill in the art from the detailed description.

According to some embodiments, an ESS includes a plurality of cell units each including a plurality of battery cells arranged in a first direction, a plurality of battery modules each accommodating the plurality of cell units arranged in a second direction perpendicular to the first direction, a module unit including the plurality of battery modules, and a pipe portion connected to a fire extinguishing tank storing a fire extinguishing agent and extending into the module unit. The pipe portion includes a main pipe extending from the fire extinguishing tank and a sub-pipe branched from the main pipe. One end of the sub-pipe is connected to a first branch point of the main pipe, another end of the sub-pipe is connected to a second branch point of the main pipe, and the sub-pipe extends to pass through all the plurality of battery modules.

When an event occurs at a point inside a module unit, the fire extinguishing agent may be supplied from both the one end of the sub-pipe and the other end of the sub-pipe to the point.

The sub-pipe may extend to pass through all the plurality of battery cells included in the module unit.

The sub-pipe extending in the first direction may be bent in the second direction or in a third direction perpendicular to the first direction and the second direction.

The sub-pipe may extend in the first direction between two adjacent cell units and may be bent in the second direction or the third direction in an outside of the cell units.

The sub-pipe may include an extension portion located inside the battery module and a connection portion bent in the second direction or the third direction in an outside of the battery module. The connection portion may be detachably coupled to the extension portion.

The sub-pipe may be arranged at a position corresponding to about 30 % to about 90 % of a height of the battery cell.

The ESS may further include a first spacer between the plurality of cell units, wherein the sub-pipe may be fixed to the first spacer.

The ESS may further include a pair of end plates to simultaneously press the plurality of cell units in the first direction and a stopper located on at least one of the pair of end plates and coupled to the sub-pipe. The stopper may extend from an outer surface of at least one of the pair of end plates in a direction perpendicular to the first direction to limit a position of the sub-pipe.

The pipe portion may include at least one of polyamide (PA), polycarbonate (PC), polyether ether ketone (PEEK), polyether ketone ketone (PEKK), polyphenylene sulfide (PPS), polyether imide (PEI), polyether sulfone (PES), or polyimide (PI).

According to some embodiments, an ESS includes a plurality of cell units each including a plurality of battery cells arranged in a first direction, a plurality of battery modules each accommodating the plurality of cell units arranged in a second direction perpendicular to the first direction, a module unit including the plurality of battery modules, and a pipe portion configured to connect a fire extinguishing tank storing a fire extinguishing agent to the plurality of battery cells. The pipe portion includes a main pipe extending from the fire extinguishing tank and a sub-pipe branched from the main pipe, the sub-pipe includes at least a first sub-pipe connected to one point of the main pipe and a second sub-pipe connected to another point of the main pipe, and the first sub-pipe and the second sub-pipe are connected to each other to form a closed loop.

When an event occurs at a point inside the module unit, the fire extinguishing agent may be supplied from both the first sub-pipe and the second sub-pipe to the point.

The closed loop extends to pass through all the plurality of battery cells included in the module unit.

The sub-pipe extending in the first direction may be bent in the second direction or in a third direction perpendicular to the first direction and the second direction.

The sub-pipe may extend in the first direction between two adjacent cell units and may be bent in the second direction or the third direction in an outside of the cell units.

The sub-pipe may include an extension portion located inside the battery module and a connection portion bent in the second direction or the third direction in an outside of the battery module. The connection portion may be detachably coupled to the extension portion.

A height of the sub-pipe may be about 30 % to about 90 % of a height of the battery cell.

The ESS may further include a first spacer between the plurality of cell units, wherein the sub-pipe may be fixed to the first spacer.

The ESS may further include a pair of end plates to simultaneously press the plurality of cell units in the first direction and a stopper located on at least one of the pair of end plates and coupled to the sub-pipe. The stopper may extend from an outer surface of at least one of the pair of end plates in a direction perpendicular to the first direction to limit a position of the sub-pipe.

The pipe portion may include at least one of polyamide (PA), polycarbonate (PC), polyether ether ketone (PEEK), polyether ketone ketone (PEKK), polyphenylene sulfide (PPS), polyether imide (PEI), polyether sulfone (PES), or polyimide (PI).

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example fire extinguishing system of an energy storage system (ESS) according to some embodiments;
FIG. 2 is a perspective view illustrating an example battery module of FIG. 1;
FIG. 3 is a perspective view illustrating a portion of the battery module of FIG. 1;
FIG. 4 is a perspective view illustrating a portion of an example ESS according to some embodiments;
FIG. 5 is a perspective view illustrating an example battery cell of FIG. 3;
FIG. 6 is a plan view of a portion of an example ESS according to some embodiments;
FIG. 7 is a plan view of a portion of a battery module of FIG. 6;
FIG. 8 illustrates a portion of an example ESS according to some embodiments;
FIG. 9 is a plan view of a portion of an example ESS according to some embodiments; and
FIG. 10 is a plan view of a portion of a battery module of FIG. 9.

### DETAILED DESCRIPTION

Hereinafter, embodiments will be described fully with reference to the accompanying drawings. When describing embodiments with reference to the drawings, the same or corresponding elements are denoted by the same reference numerals. As those skilled in the art would realize, the described embodiments may be modified in various different ways, all without departing from the disclosure or scope of the claims. The drawings and description are to be regarded as illustrative in nature and not restrictive.

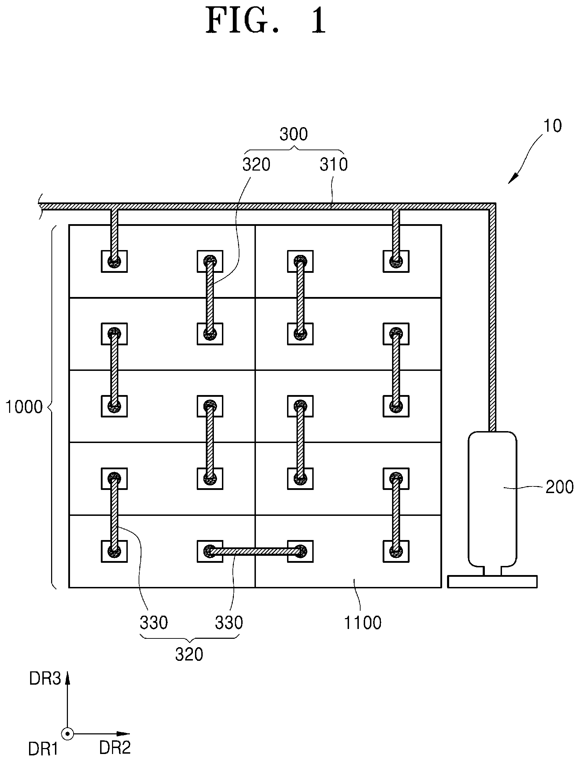

FIG. 1 is a perspective view illustrating an example fire extinguishing system of an energy storage system (ESS) 10 according to some embodiments.

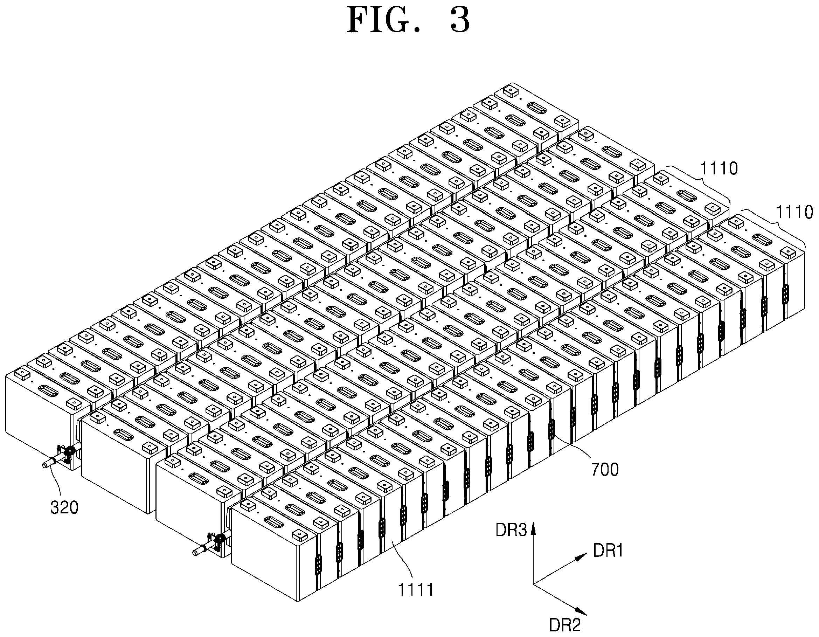

The ESS 10 may be a system that is capable of producing and storing electricity and may supply electricity and control efficient power supply and demand. The ESS 10 includes a plurality of battery modules 1100 each including a plurality of batteries (battery cells 1111 (FIG. 3)), and thus, the ESS 10 may be subject to fire. According to some embodiments, the ESS 10 with enhanced fire extinguishing capability is described below.

Referring to FIG. 1, the ESS 10 having the fire extinguishing system according to some embodiments may include a module unit 1000 including the battery modules 1100, a fire extinguishing tank 200 including a fire extinguishing agent, and a pipe portion 300 connected to the fire extinguishing tank 200 and extending into the module unit 1000.

When a temperature rises due to an event such as a fire or explosion in a battery cell 1111 (FIG. 3), a sub-pipe 320 near the battery cell 1111 may be melted. The fire extinguishing tank 200 may spray the fire extinguishing agent, and the fire extinguishing agent may be sprayed to the melted portion of the sub-pipe 320 to extinguish a fire that has occurred in the battery cell 1111. That is, by directly spraying the fire extinguishing agent to the battery cell 1111 in which a fire has occurred in the battery module 1100, the battery cell 1111 in which the fire has occurred may be cooled and the fire may be prevented from spreading to neighboring battery cells 1111.

The pipe portion 300 is a pipe through which the fire extinguishing agent flows, and may be a component that moves and sprays the fire extinguishing agent when thermal runaway occurs in the battery cell 1111. The pipe portion 300 may extend into the battery module 1100 and melt near the battery cell 1111 in which thermal runaway has occurred, so that the battery cell 1111 may be immersed in the fire extinguishing agent. Since the temperature of the battery cell 1111 immersed in the fire extinguishing agent may be lowered, it is possible to obtain a fire extinguishing effect against thermal runaway and prevent heat from being transferred to neighboring battery cells 1111.

The pipe portion 300 may include an insulating material. As an example, the material of the pipe portion 300 may be polyamide (PA), polycarbonate (PC), polyether ether ketone (PEEK), polyether ketone ketone (PEKK), polyphenylene sulfide (PPS), polyether imide (PEI), polyether sulfone (PES), or polyimide (PI). As another example, the pipe portion 300 may include a material having a melting point of 260 °C or less.

The pipe portion 300 may include a main pipe 310 having one end connected to the fire extinguishing tank 200, and the sub-pipe 320 branched from the main pipe portion 300.

The main pipe 310 may extend from the fire extinguishing tank 200 and the sub-pipe 320 may be branched from the main pipe 310.

The sub-pipe 320 may form a closed loop so that the fire extinguishing agent is precisely sprayed to a site where an event such as a fire has occurred, thereby improving the fire extinguishing capability of the ESS 10.

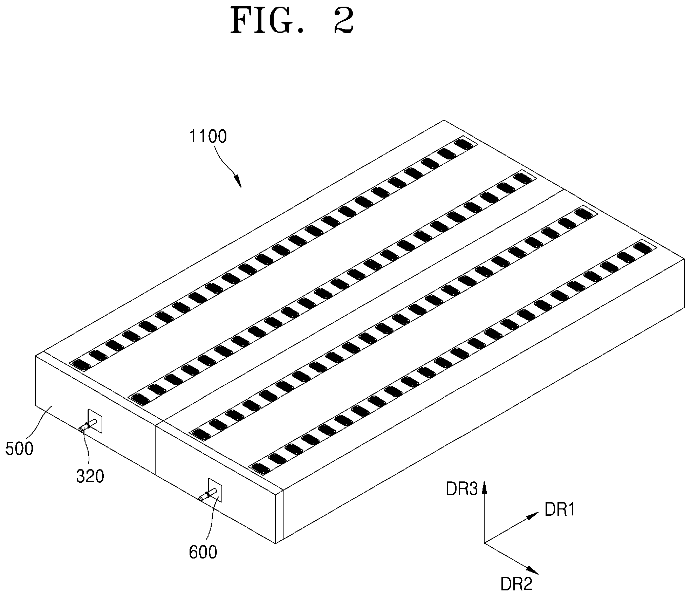

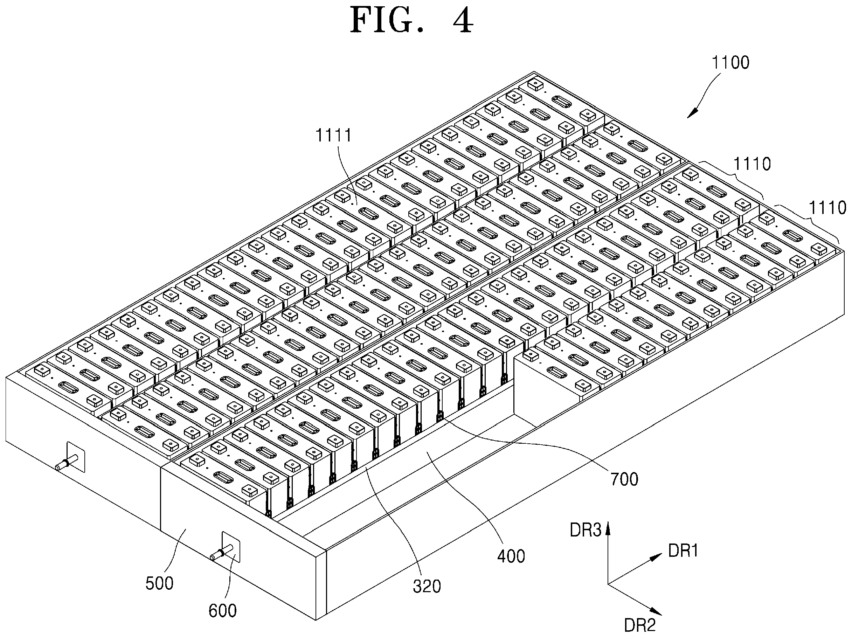

FIG. 2 is a perspective view illustrating an example battery module 1100 of FIG. 1. FIG. 3 is a perspective view illustrating a portion of the battery module 1100 of FIG. 1, and FIG. 4 is a perspective view illustrating a portion of the ESS 10 according to some embodiments.

The ESS 10 according to some embodiments may include a plurality of battery modules 1100.

Referring to FIGS. 2 and 3, each of the battery modules 1100 may include a plurality of battery cells 1111 arranged in a first direction DR1, a sub-pipe 320, and a housing that accommodates the battery cells 1111 and the sub-pipe 320.

The battery cells 1111 may be arranged in one direction so that the wide surfaces of the battery cells 1111 face each other, and the battery cells 1111 may form a cell unit 1110 that is a set of battery cells 1111 arranged in one row.

In addition, the battery module 1100 may include a plurality of cell units 1110 each including the battery cells 1111 arranged in the first direction DR1. The cell units 1110 may be arranged in a second direction DR2 perpendicular to the first direction DR1. That is, each of the battery modules 1100 may accommodate the cell units 1110 arranged in the second direction DR2.

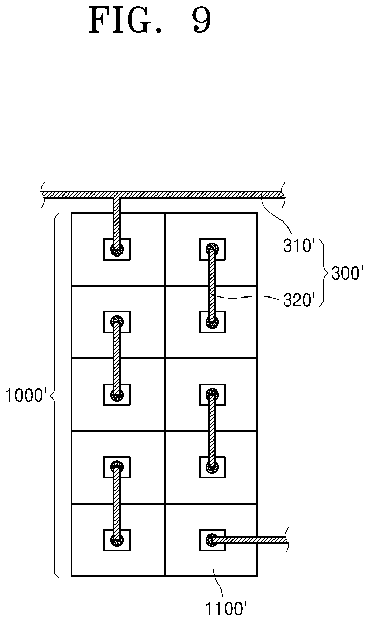

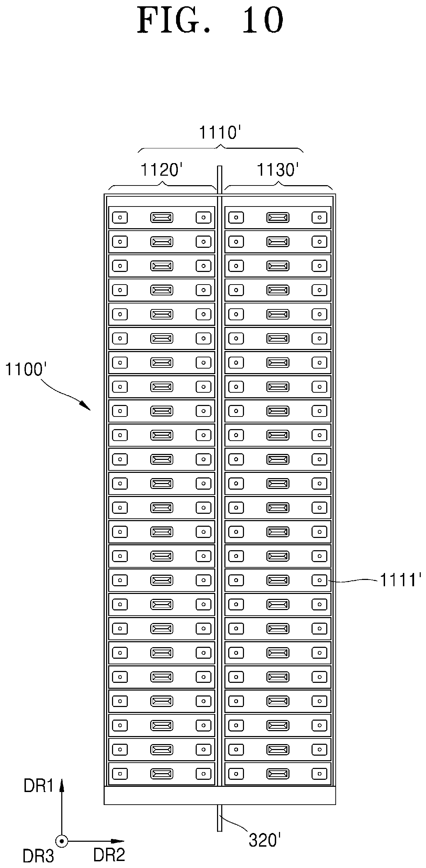

A plurality of cell units 1110 may be accommodated in one battery module 1100. As an example, one battery module 1100 may include four cell units 1110 (as shown in FIGs. 2, 3, and 4) or two cell units 1110 (as shown in FIGs. 9 and 10) arranged in the second direction DR2.

The battery cells 1111 may be arranged in one direction so that the wide surfaces of the battery cells 1111 face each other, and the arranged battery cells 1111 may be fixed by the housing. The housing may include a pair of end plates 500 facing the wide surfaces of the battery cells 1111, and a side plate, a bottom plate, and a top plate connecting the pair of end plates 500 to each other according to the orientation shown in FIG. 2, for example. The side plate may support the side surface of the battery cell 1111, the bottom plate may support the bottom surface of the battery cell 1111, and the top plate may support the top surface of the battery cell 1111. In addition, the pair of end plates 500, the side plate, the bottom plate, and the top plate may be connected to each other by members such as bolts, for example. The number and arrangement of battery cells 1111 are not limited to the structure illustrated in FIG. 3 and may be changed as necessary.

The sub-pipe 320 may be arranged between the cell units 1110 along the first direction DR1. The sub-pipe 320 may be arranged at a point corresponding to about 30 % to about 90 % of the height (e.g. in a third direction DR3 perpendicular to the first direction and the second direction) of the battery cell 1111. Since the sub-pipe 320 is arranged at a point corresponding to about 30 % to about 90 % of the height of the battery cell 1111, the sub-pipe 320 may melt immediately near a specific battery cell 1111 in which thermal runaway has occurred. Accordingly, the temperature of the battery cell 1111 may be lowered by immersing the battery cell 1111 in the fire extinguishing agent, thereby extinguishing the fire and blocking heat transfer to neighboring battery cells 1111.

The battery module 1100 may further include the pair of end plates 500 that simultaneously press the battery cells 1111 in a direction in which the battery cells 1111 are arranged. That is, the pair of end plates 500 may simultaneously press the cell units 1110 in the first direction DR1.

The end plate 500 may face the wide surface of the battery cell 1111 and apply appropriate pressure thereto to suppress volume expansion of the battery cell 1111 when swelling of the battery cell 1111 occurs, thereby suppressing performance degradation of the battery cell 1111.

Meanwhile, the battery module 1100 may further include a stopper 600 to limit the position of the sub-pipe 320. The stopper 600 may be located on the outer surface of the end plate 500 corresponding to a point where the sub-pipe 320 extends to the outside of the battery module 1100. That is, the stopper 600 may be located on at least one of the pair of end plates 500 and coupled to the sub-pipe 320.

Specifically, the stopper 600 may be arranged on the outer surface of at least one of the pair of end plates 500 to fix the sub-pipe 320. That is, the stopper 600 may extend from the outer surface of at least one of the pair of end plates 500 in a direction perpendicular to the extending direction of the sub-pipe 320 to limit the position of the sub-pipe 320.

The stopper 600 may extend in a direction perpendicular to the extending direction of the sub-pipe 320 to fix the sub-pipe 320 to the battery module 1100, thereby improving structural stability.

According to some embodiments, the battery module 1100 may further include a first spacer 400 located between the cell units 1110 and a second spacer 700 located between the battery cells 1111.

The first spacer 400 may extend in the first direction DR1, which is a direction in which the battery cells 1111 are arranged, so as to correspond to the length of the cell unit 1110. The sub-pipe 320 may be fixed to at least a portion of the first spacer 400 located between the cell units 1110 and may extend in the first direction DR1.

The first spacer 400 may fix the sub-pipe 320 to reduce the risk of interference when the sub-pipe 320 is assembled to the battery module 1100 and to improve structural stability. In addition, the first spacer 400 may be arranged between the cell units 1110 to prevent heat from being transferred to other cell units 1110 when thermal runaway occurs in the battery cell 1111 included in one cell unit 1110.

Meanwhile, the second spacer 700 may be arranged between the battery cells 1111 included in one cell unit 1110. The second spacer 700 may be located between the battery cells 1111 to prevent heat from being transferred to neighboring battery cells 1111 if thermal runaway occurs in a specific battery cell 1111.

The second spacer 700 may improve the stability of the battery cells 1111 by electrically-insulating and heat-insulating the space between the battery cells 1111. In addition, the second spacer 700 may be installed to support one side surface of the battery cell 1111. Accordingly, the alignment of the battery cells 1111 may be facilitated when the battery module 1100 is assembled and structural stability may be improved by preventing the battery cells 1111 from being twisted.

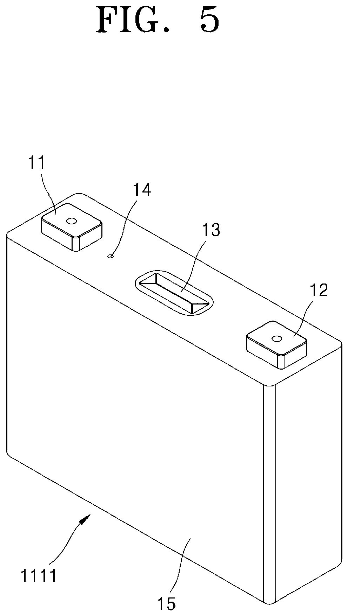

FIG. 5 is a perspective view schematically illustrating an example of the battery cell of FIG. 3.

Referring to FIG. 5, each battery cell 1111 may include a battery case 15, and an electrode assembly and an electrolyte housed in the battery case 15. The electrode assembly and the electrolyte react electrochemically to generate energy. Terminal portions 11 and 12, a vent 13 that is a passage for discharging internally generated gas, and an electrolyte injection port 14 for injecting the electrolyte into the battery case 15 may be provided at one side of the battery cell 1111. The terminal portions 11 and 12 of the battery cell 1111 may be, respectively, a positive terminal 11 and a negative terminal 12 having different polarities. The terminal portions 11 and 12 of the adjacent battery cells 1111 may be electrically connected in series or in parallel by a connecting tab. The battery cell 1111 is not limited to such a structure and various connection structures may be adopted, as necessary, according to other embodiments.

Hereinafter, the fire extinguishing system that minimizes the fire extinguishing agent spraying time by the sub-pipe 320 forming a closed loop and is easy to replace and install is described below.

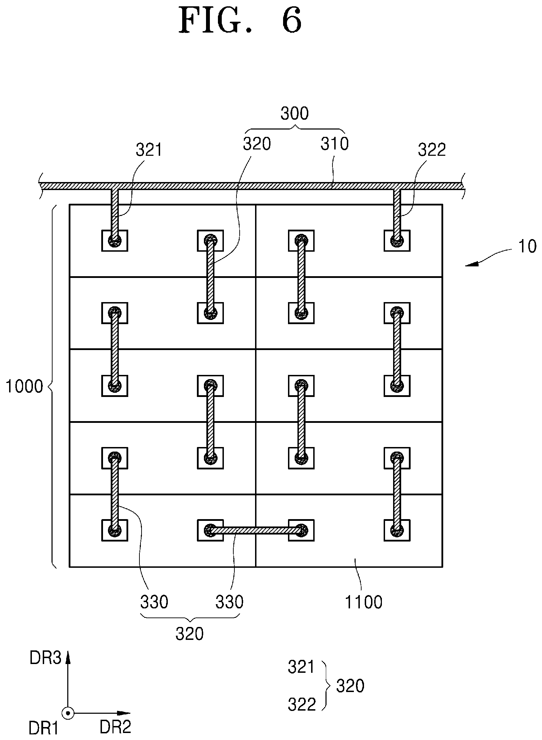

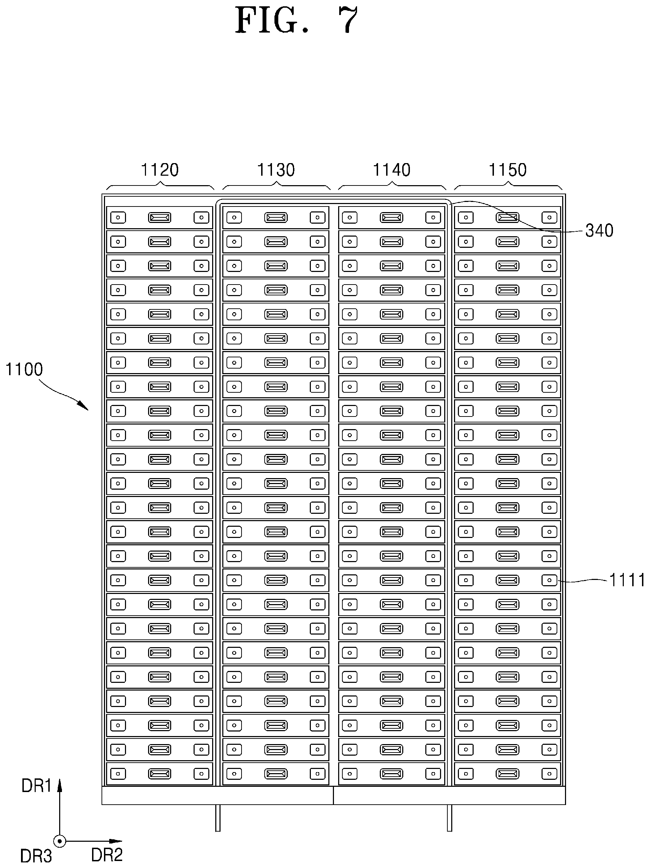

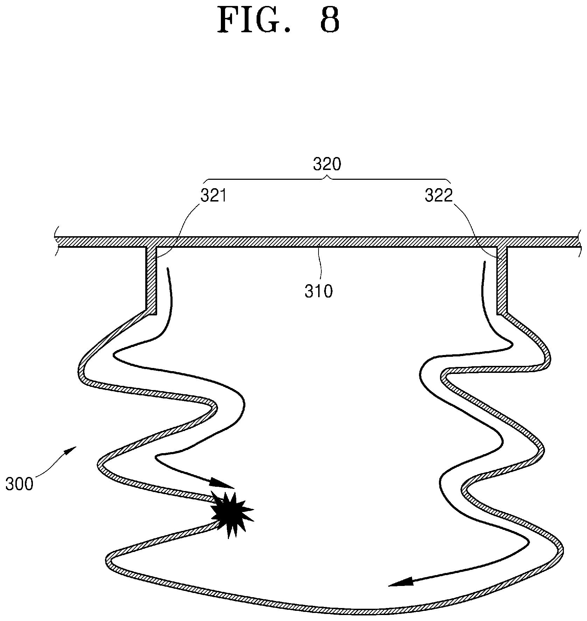

FIG. 6 is a plan view of a portion of an ESS 10 according to an embodiment, FIG. 7 is a plan view of a portion of a battery module of FIG. 6, and FIG. 8 illustrates a portion of an ESS 10 according to some embodiments.

An ESS 10 may include at least one module unit 1000. The module unit 1000 may be a unit in which a plurality of battery modules 1100 are arranged in a second direction DR2 and/or a third direction DR3. One closed-loop sub-pipe 320 may be arranged in a module unit 1000. Hereinafter, a fire extinguishing system in one module unit 1000 that includes a plurality of battery modules 1100 is described in detail.

Referring to FIGS. 6 to 8, the sub-pipe 320 may include at least a first sub-pipe 321 branched from a first branch point, which is one point of a main pipe 310, and a second sub-pipe 322 branched from a second branch point, which is another point of the main pipe 310. The first sub-pipe 321 and the second sub-pipe 322 may be connected to each other in one module unit 1000 to form a closed loop. In other words, the sub-pipe 320 may include at least the first sub-pipe 321 connected to one point of the main pipe 310 and the second sub-pipe 322 connected to another point of the main pipe 310, and the first sub-pipe 321 and the second sub-pipe 322 may be connected to each other to form the closed loop.

One end of the sub-pipe 320 may be connected to the first branch point, which is one point of the main pipe 310, and the other end of the sub-pipe 320 may be connected to the second branch point, which is another point of the main pipe 310. The sub-pipe 320 may be connected to the main pipe 310 and may extend to pass through all the battery modules 1100.

The first sub-pipe 321 may be branched from the first branch point, which is one point of the main pipe 310 having one end connected to the fire extinguishing tank 200. The first sub-pipe 321 may enter a battery module 1100 of the module unit 1000 and extend in a first direction DR1 in which the battery cells 1111 of the battery module 1100 are arranged.

The sub-pipe 320 entering the battery module 1100 may extend in the first direction DR1 to pass through at least one side surface of all the cell units 1110 within the battery module 1100. In other words, the sub-pipe 320 of the closed loop may extend to pass through all the battery cells 1111 included in the battery module 1100 and, similarly, every battery cell 1111 of every battery module 1100 in the module unit 1000.

The sub-pipe 320 may extend to be bent in the second direction DR2 or the third direction DR3 perpendicular to the first direction DR1 immediately before entering a battery module 1100 or immediately after exiting the battery module 1100. That is, the sub-pipe 320 extending in the first direction DR1 may be bent in the second direction DR2 or in the third direction DR3 perpendicular to the first direction DR1 and the second direction DR2.

The sub pipe 320 passing through all the battery cells 1111 inside the battery module 1100 and exiting the battery module 1100 may enter another battery module 1100. The sub-pipe 320 passing through at least one area of all the battery cells 1111 inside another battery module 1100 and exiting the battery module 1100 may enter another battery module 1100 again. In the same manner as described above, the sub-pipe 320 may be arranged to extend into all the battery modules 1100 of one module unit 1000 and pass through all the battery cells 1111. That is, the closed loop may extend to pass through all the battery cells 1111 included in the module unit 1000.

That is, one end of the sub-pipe 320 branched from the first branch point of the main pipe 310 may extend into all the battery modules 1100 of the module unit 1000 and pass through all the battery cells 1111, and the other end of the sub-pipe 320 may be connected to the second branch point of the main pipe 310. In this manner, the sub-pipe 320 of the closed loop may be formed.

The sub-pipe 320 may include an extension portion 340 located inside the battery module 1100 and a connection portion 330 bent in the second direction DR2 or the third direction DR3 in the outside of the battery module 1100. The connection portion 330 may be detachably coupled to the extension portion 340.

The extension portion 340 may be a portion of the sub-pipe 320 extending inside the battery module 1100. The extension portion 340 may extend between the cell units 1110. According to an alternative embodiment, the extension portion 340 may be bent in the second direction DR2 to extend between the end plates 500 and the main surfaces of the battery cells 1111 directly facing the end plates 500, extend again between other cell units 1110, and exit the battery module 1100. An area between one end and the other end of the extension portion 340 may pass through all the battery cells 1111 inside one battery module 1100.

The connection portion 330 is a portion of the sub-pipe 320 that is bent in the second direction DR2 or the third direction DR3 in the outside of the battery module 1100, and the connection portion 330 may be detachably coupled to the extension portion 340.

The end of the extension portion 340 that extends along the first direction DR1 and exits the battery module 1100 may be connected to the connection portion 330. The connection portion 330 may extend to be bent in the second direction DR2 or the third direction DR3 and then bent again in the first direction DR1 so as to be connected to another extension portion 340 inside another battery module 1100.

The end of one connection portion 330 may be connected to the first branch point or the second branch point of the main pipe 310.

As such, the sub-pipe 320 may be formed by alternately coupling the extension portion 340 to the connection portion 330 that is connected to the extension portion 340.

The sub-pipe 320 may have a structure that connects all the battery modules 1100 without any other separate additional pipes. As an example, one extension portion 340 may be arranged to correspond to one battery module 1100 and the battery modules 1100 may be arranged in the second direction DR2 or the third direction DR3, so that different extension portions 340 are connected to each other by the connection portion 330 to form one sub-pipe 320 of the closed loop.

That is, the pipe portion 300 may include the main pipe 310 and the sub-pipe 320 formed by alternately coupling the extension portion 340 to the connection portion 330. That is, the pipe portion 300 may have a simple structure with no pipes other than the main pipe 310 and the sub-pipe 320 and may be easily installed.

By arranging the battery modules 1100 and connecting the extension portion 340 to the connection portions 330, the installation of the ESS 10 may be simplified. When some battery modules 1100 are to be replaced, only the extension portion 340 of the battery module 1100 to be replaced and the connection portion 330 connected thereto may be separated, thereby simplifying the replacement.

When an event such as a fire occurs at any point inside the module unit 1000, the fire extinguishing agent may be sprayed from the fire extinguishing tank 200 to the corresponding point through the main pipe 310 and the sub-pipe 320. When an event occurs at any point inside the module unit 1000, the fire extinguishing agent may be supplied from both one end of the sub-pipe 320 and the other end of the sub-pipe 320 to the corresponding point, as indicated in FIG. 8.

Specifically, when an event such as an explosion occurs in at least one battery cell 1111 inside the module unit 1000, the sub-pipe 320 near the corresponding battery cell 1111 may be melted and the fire extinguishing agent may move from both one end of the sub-pipe 320 and the other end of the sub-pipe 320 and may be sprayed near the corresponding battery cell 1111.

The fire extinguishing agent may be injected from the main pipe 310 to the corresponding battery cell 1111 through both the first sub-pipe 321 and the second sub-pipe 322. In other words, since the sub-pipe 320 is configured as the closed circuit, all the fire extinguishing agents filled in the sub-pipe 320 may be sprayed to a fire site. This may reduce the time it takes for the fire extinguishing agent to be sprayed to the fire site, thereby improving fire extinguishing efficiency. In addition, even when either the first sub-pipe 321 or the second sub-pipe 322 is clogged, the fire extinguishing agent may be sprayed to the fire site via the unclogged one of the first sub-pipe 321 and the second sub-pipe 322.

Unlike a configuration in which a fire extinguishing agent flows from a fire extinguishing tank through a main pipe, passes through a branch pipe branched from the main pipe, and then flows from the branch pipe to one of a plurality of spraying pipes respectively branched to a plurality of battery modules, the sub-pipe 320 branching from the main pipe 310 in the closed circuit allows the fire extinguishing agent to flow through both the first sub-pipe 321 and the second sub-pipe 322, so that all the fire extinguishing agents filled in the sub-pipe 320 may be sprayed to the fire site.

As an example, the battery module 1100 may accommodate four rows of cell units 1110 by sequentially arranging a first cell unit 1120 closest to a side case of the battery module 1100 in the second direction DR2, a second cell unit 1130 closest to the first cell unit 1120, a third cell unit 1140 adjacent to the second cell unit 1130, and a fourth cell unit 1150 closest to a side case opposite to the first cell unit 1120.

That is, the sub-pipe 320 may be connected and arranged between the first cell unit 1120 facing one edge of the battery module 1100 and the second cell unit 1130 closest to the first cell unit 1120 and between the fourth cell unit 1150 facing the other edge of the battery module 1100 and the third cell unit 1140 closest to the fourth cell unit 1150.

The sub-pipe 320 that enters the battery module 1100 may extend in the first direction DR1 between the first cell unit 1120 and the second cell unit 1130, and then, may extend to be bent in the second direction DR2 within the battery module 1100 immediately before reaching the end plate 500. The sub-pipe 320 that extends to be bent in the second direction DR2 may extend to be bent again between the third cell unit 1140 and the fourth cell unit 1150, and then, may exit the battery module 1100.

The sub-pipe 320 may extend to be bent in the third direction DR3 perpendicular to the first direction DR1 and the second direction DR2 immediately before entering the battery module 1100 or immediately after exiting the battery module 1100.

In the same manner as described above, the sub-pipe 320 may be branched from the first branch point of the main pipe 310, may be arranged in a U-shape to pass between the first cell unit 1120 and the second cell unit 1130 and between the third cell unit 1140 and the fourth cell unit 1150 within one battery module 1100, and then, may exit the battery module 1100 again. The sub-pipe 320 that exits the battery module 1100 may be connected again to the main pipe 310 at the second branch point of the main pipe 310 by repeating the process of entering another battery module 1100, being arranged in a U-shape, and then exiting the other battery module 1100.

FIG. 9 is a plan view of a portion of an ESS 10 according to some embodiments, and FIG. 10 is a plan view of a portion of a battery module of FIG. 9.

Referring to FIGS. 9 and 10, a battery module 1100' of a module unit 1000' may include two rows of cell units 1110' arranged in the second direction DR2. The cell units 1110' may include a first cell unit 1120' and a second cell unit 1130', and a sub-pipe 320' may be arranged between the first cell unit 1120' and the second cell unit 1130'.

The sub-pipe 320' branched from one point of a main pipe 310' may enter the battery module 1100', may extend in the first direction DR1 between the first cell unit 1120' and the second cell unit 1130', and may exit the battery module 1100' from the side opposite to the side where the sub-pipe 320' enters the battery module 1100'. The sub-pipe 320' that exits the battery module 1100' may be bent in the second direction DR2 or the third direction DR3, may be bent again in the first direction DR1, and then, may enter another battery module 1100'. In this manner, the sub-pipe 320' may further extend and connect to the main pipe 310' again. As another example, in the same manner as described above, the sub-pipe 320' may extend again in another module unit 1000' and then connect to the main pipe 310'.

The ESS 10 including the sub-pipe 320' forming the closed circuit in the at least one module unit 1000 may spray all the fire extinguishing agent filled in the sub-pipe 320 to the fire site.

High heat caused by an event such as a fire or explosion in a battery cell 1111 inside the ESS 10 may melt the sub-pipe 320' near the battery cell 1111, and the fire extinguishing agent filled in the sub-pipe 320' may be sprayed from the melted sub-pipe 320' to the corresponding battery cell 1111 through the first sub-pipe 321' and the second sub-pipe 322' branched from different points of the main pipe 310'. Even when either the first sub-pipe 321' or the second sub-pipe 322' is clogged, the fire extinguishing agent may be sprayed to the fire site through the unclogged one of the first sub-pipe 321' and the second sub-pipe 322'.

Due to the sub-pipe 320' of the closed loop, the time for the fire extinguishing agent to reach the battery cell 1111 where an event has occurred may be shortened, and more extinguishing agent may be directly sprayed to the corresponding battery cell 1111, so that the fire extinguishing efficiency of the ESS 10 may be improved.

According to embodiments, when a fire occurs in an ESS 10, the pipes passing through the battery cells 1111 may be configured as the closed loop, thereby enhancing the fire extinguishing effect.

However, the effects that may be obtained through the disclosure are not limited to those described above, and other technical effects that are not mentioned herein will be clearly understood from the description by those of ordinary skill in the art.

As used herein, the term "and/or" includes any and all combinations of one or more of the associated listed items. Expressions such as "at least one of," when preceding a list of elements, modify the entire list of elements and do not modify the individual elements of the list.

In addition, the terms "comprise or include" and/or "comprising or including" as used in the present application specify the presence of the stated figures, numbers, steps, operations, members, elements, and/or groups thereof, but do not preclude the presence or addition of one or more other figures, numbers, steps, operations, members, elements, and/or groups thereof. In addition, when describing the embodiments, the terms "can" and "may" as used herein may include "one or more embodiments."

In addition, in order to help the understanding of the disclosure, the accompanying drawings are not drawn to scale and the dimensions of some elements may be exaggerated. Furthermore, the same reference numbers may be assigned to the same elements in different embodiments.

The expression that two comparison targets are "the same" means that they are "substantially the same." Therefore, the expression "substantial the same" may include deviations that are considered low in the art, for example, deviations less than 5 %. In addition, the expression that "parameters are uniform over a given region" may mean that parameters are uniform from an average viewpoint.

It will be understood that although "first," "second," etc. may be used herein to describe various elements, these elements should not be limited by these terms. These terms are only used to distinguish one element from another, and it will be understood that a first element may also be a second element unless otherwise specifically stated.

Throughout the specification, each element may be singular or plural unless otherwise specifically stated.

The expression "any configuration is disposed "above (or below)" an element or "on (or under)" an element may mean that any configuration is disposed in contact with the upper surface (or lower surface) of the element, and may also mean that other configurations may be disposed between the element and any configuration disposed on (or under) the element.

It will be understood that when an element is referred to as being "connected to," "coupled to," or "in contact with" another element, the element may be "directly connected to," "directly coupled to," or in direct contact with" the other element, or may be "connected to," "coupled to," or "in contact with" the other element with another element therebetween or through another element. In addition, it will be understood that when a portion is referred to as being "electrically coupled to" another element portion, the portion may be directly coupled to the other portion, or may be coupled to the other portion with an intervening element therebetween.

Throughout the disclosure, the expression "A and/or B" indicates only A, only B, or both A and B unless otherwise stated. As used herein, the term "and/or" includes any and all combinations of one or more of the associated listed items. The expression "C to D" indicates "C or more and D or less" unless otherwise stated.

The terminology as used herein is for the purpose of describing embodiments and is not intended to limit the disclosure.

It should be understood that the disclosure is not limited to only the embodiments described herein but is also intended to cover various modifications and equivalent arrangements included within the present disclosure and the equivalent scope of the appended claims.

Embodiments are set out in the following clauses:
1. An energy storage system comprising:
   a module unit comprising the plurality of battery modules;
   the plurality of battery modules each accommodating a plurality of cell units;
   the plurality of cell units of each of the plurality of battery modules each of the plurality of cell units comprising a plurality of battery cells arranged in a first direction and the plurality of cell units arranged in a second direction, perpendicular to the first direction; and
   a pipe portion connected to a fire extinguishing tank storing a fire extinguishing agent and extending into the module unit, wherein
   the pipe portion comprises a main pipe extending from the fire extinguishing tank and a sub-pipe branched from the main pipe, and
   one end of the sub-pipe is connected to a first branch point of the main pipe, another end of the sub-pipe is connected to a second branch point of the main pipe, and the sub-pipe extends to pass through all the plurality of battery modules.
2. The energy storage system of clause 1, wherein, when an event occurs at a point inside the module unit, the fire extinguishing agent is supplied from both the one end of the sub-pipe and the other end of the sub-pipe to the point.
3. The energy storage system of clause 1 or 2, wherein the sub-pipe extends to pass through all of the plurality of battery cells of the module unit.
4. The energy storage system of clause 1, 2 or 3, wherein the sub-pipe extending in the first direction is bent in the second direction or in a third direction perpendicular to the first direction and the second direction.
5. The energy storage system of clause 4, wherein the sub-pipe extends in the first direction between two adjacent cell units among the plurality of cell units and is bent in the second direction or the third direction outside the plurality of cell units.
6. The energy storage system of clause 5, wherein
   the sub-pipe comprises an extension portion located inside the plurality of battery modules and a connection portion bent in the second direction or the third direction outside of the plurality of battery modules, and
   the connection portion is detachably coupled to the extension portion.
7. The energy storage system of any preceding clause, wherein the sub-pipe is arranged at a position corresponding to about 30 % to about 90 % of a height of the battery cell.
8. The energy storage system of any preceding clause, further comprising a first spacer between the plurality of cell units,
   wherein the sub-pipe is fixed to the first spacer.
9. The energy storage system of any preceding clause, further comprising:
   a pair of end plates configured to simultaneously press the plurality of cell units in the first direction; and
   a stopper located on at least one of the pair of end plates and coupled to the sub-pipe,
   wherein the stopper extends from an outer surface of at least one of the pair of end plates in a direction perpendicular to the first direction to limit a position of the sub-pipe.
10. An energy storage system comprising:
   a module unit comprising a plurality of battery modules;
   the plurality of battery modules each accommodating a plurality of cell units
   the plurality of cell units of each of the plurality of battery modules, each comprising a plurality of battery cells, wherein the plurality of battery cells is arranged in a first direction and the plurality of cells units is arranged in a second direction, perpendicular to the first direction;
      and
   a pipe portion configured to connect a fire extinguishing tank storing a fire extinguishing agent to the plurality of battery cells, wherein
   the pipe portion comprises a main pipe extending from the fire extinguishing tank and a sub-pipe branched from the main pipe,
   the sub-pipe comprises at least a first sub-pipe connected to one point of the main pipe and a second sub-pipe connected to another point of the main pipe, and
   the first sub-pipe and the second sub-pipe are connected to each other to form a closed loop.
11. The energy storage system of clause 10, wherein, when an event occurs at a point inside the module unit, the fire extinguishing agent is supplied from both the first sub-pipe and the second sub-pipe to the point.
12. The energy storage system of clause 10 or 11, wherein the closed loop extends to pass through all of the plurality of battery cells of the module unit.
13. The energy storage system of clause 10, 11 or 12, wherein the sub-pipe extending in the first direction is bent in the second direction or in a third direction perpendicular to the first direction and the second direction.
14. The energy storage system of clause 13, wherein the sub-pipe extends in the first direction between two adjacent cell units and is bent in the second direction or the third direction in an outside of the cell units.
15. The energy storage system of clause 14, wherein
   the sub-pipe comprises an extension portion located inside the plurality of battery modules and a connection portion bent in the second direction or the third direction outside of the plurality of battery modules, and
   the connection portion is detachably coupled to the extension portion.

## Claims

1. An energy storage system comprising:
a module unit comprising a plurality of battery modules; the plurality of battery modules each accommodating a plurality of cell units; the plurality of cell units of each of the plurality of battery modules each comprising a plurality of battery cells arranged in a first direction, and the plurality of cell units is arranged in a second direction, perpendicular to the first direction; and
a pipe portion connected to a fire extinguishing tank storing a fire extinguishing agent and extending into the module unit, wherein
the pipe portion comprises a main pipe extending from the fire extinguishing tank and a sub-pipe branched from the main pipe, and
one end of the sub-pipe is connected to a first branch point of the main pipe, another end of the sub-pipe is connected to a second branch point of the main pipe, and the sub-pipe extends to pass through all the plurality of battery modules.

2. The energy storage system of claim 1, wherein, when an event occurs at a point inside the module unit, the fire extinguishing agent is supplied from both the one end of the sub-pipe and the other end of the sub-pipe to the point.

3. The energy storage system of claim 1 or 2, wherein the sub-pipe extends to pass through all of the plurality of battery cells of the module unit.

4. The energy storage system of claim 1, 2 or 3, wherein the sub-pipe extending in the first direction is bent in the second direction or in a third direction perpendicular to the first direction and the second direction.

5. The energy storage system of claim 4, wherein the sub-pipe extends in the first direction between two adjacent cell units among the plurality of cell units and is bent in the second direction or the third direction outside the plurality of cell units.

6. The energy storage system of claim 5, wherein
the sub-pipe comprises an extension portion located inside the plurality of battery modules and a connection portion bent in the second direction or the third direction outside of the plurality of battery modules, and
the connection portion is detachably coupled to the extension portion.

7. The energy storage system of any preceding claim, wherein the sub-pipe is arranged at a position corresponding to about 30 % to about 90 % of a height of the battery cell.

8. The energy storage system of any preceding claim, further comprising a first spacer between the plurality of cell units,
wherein the sub-pipe is fixed to the first spacer.

9. The energy storage system of any preceding claim, further comprising:
a pair of end plates configured to simultaneously press the plurality of cell units in the first direction; and
a stopper located on at least one of the pair of end plates and coupled to the sub-pipe,
wherein the stopper extends from an outer surface of at least one of the pair of end plates in a direction perpendicular to the first direction to limit a position of the sub-pipe.

10. An energy storage system comprising:
a module unit comprising a plurality of battery modules; the plurality of battery modules each accommodating a plurality of cell units; the plurality of cell units of each of the plurality of battery modules each comprising a plurality of battery cells, wherein the plurality of battery cells is arranged in a first direction and the plurality of cells units is arranged in a second direction, perpendicular to the first direction; and
a pipe portion configured to connect a fire extinguishing tank storing a fire extinguishing agent to the plurality of battery cells, wherein
the pipe portion comprises a main pipe extending from the fire extinguishing tank and a sub-pipe branched from the main pipe,
the sub-pipe comprises at least a first sub-pipe connected to one point of the main pipe and a second sub-pipe connected to another point of the main pipe, and
the first sub-pipe and the second sub-pipe are connected to each other to form a closed loop.

11. The energy storage system of claim 10, wherein, when an event occurs at a point inside the module unit, the fire extinguishing agent is supplied from both the first sub-pipe and the second sub-pipe to the point.

12. The energy storage system of claim 10 or 11, wherein the closed loop extends to pass through all of the plurality of battery cells of the module unit.

13. The energy storage system of claim 10, 11 or 12, wherein the sub-pipe extending in the first direction is bent in the second direction or in a third direction perpendicular to the first direction and the second direction.

14. The energy storage system of claim 13, wherein the sub-pipe extends in the first direction between two adjacent cell units and is bent in the second direction or the third direction in an outside of the cell units.

15. The energy storage system of claim 14, wherein
the sub-pipe comprises an extension portion located inside the plurality of battery modules and a connection portion bent in the second direction or the third direction outside of the plurality of battery modules, and
the connection portion is detachably coupled to the extension portion.
